# EUROPÄISCHE PATENTSCHRIFT

(11) **EP 0 686 525 B1**
(45) Veröffentlichungstag und Bekanntmachung des Hinweises auf die Patenterteilung: **11.11.1998**
(21) Anmeldenummer: 95104028.6
(22) Anmeldetag: 18.03.1995
(51) Int. Cl.: B60R 16/02

(54) **Multifunktionseinrichtung zur Betätigung unterschiedlicher Stellglieder in einem Kraftfahrzeug und Kraftfahrzeug mit einer derartigen Multifunktionseinrichtung**
Multifunctional Device for actuating different Actuators in a Motor Vehicle and Motor Vehicle comprising such a multifunctional Device
Installation multifonctionnelle pour l'activation de différents organes dans un véhicule et véhicule avec une telle installation

(30) Priorität: 06.06.1994 DE 4419772
(43) Veröffentlichungstag der Anmeldung: 13.12.1995
(73) Patentinhaber: Volkswagen Aktiengesellschaft, 38436 Wolfsburg (DE)
(72) Erfinder: Junge, Michael, Dr., D-38465 Brome (DE)

(56) Entgegenhaltungen:
- EP-A- 0 056 587
- EP-A- 0 452 565
- US-A- 4 797 924
- PATENT ABSTRACTS OF JAPAN vol. 8, no. 220 (M-330) (1657) 6. Oktober 1984 & JP-A-59 102 633 (TOYOTA) 13. Juni 1984

## Beschreibung

Die Erfindung betrifft eine Multifunktionseinrichtung zur Betätigung unterschiedlicher Stellglieder in einem Kraftfahrzeug nach dem Oberbegriff des Patentanspruchs 1 und ein Kraftfahrzeug mit einer derartigen Multifunktionseinrichtung.

Durch die Zunahme der Steuerelemente bzw. Stellglieder, insbesondere durch Komfortelemente im Kraftfahrzeug wird auch die Komplexität und Vielfalt der zu betätigenden Bedienelemente immer größer. Um eine Minimierung der Anzahl der unterschiedlichen Bedienelemente zu erreichen, ist es bekannt, manuell betätigbare Multifunktionselemente, beispielsweise joystickähnliche oder Dreh-Schaltelement, zu verwenden, die jedoch aus Gründen der Übersichtlichkeit für die Bedienperson nur eine bedingte Anzahl von Auswahlfunktionen übernehmen können.

Zur Erhöhung der Funktionalität eines Bedienelementes ist in der deutschen Offenlegungsschrift DE 32 38 853 A1 eine sprachsteuerbare Einrichtung von Aggregaten oder Vorrichtungen in einem Kraftfahrzeug beschrieben, bei der durch von Personen gesprochene Befehle, wie "Scheinwerfer ein" oder "Scheinwerfer aus" die Aggregate ohne Betätigung von Schaltern oder Tastaturen gesteuert werden. Dazu werden alle vorkommenden Befehle vorab in Form von Musterbefehlen in einer Sprachsteuervorrichtung abgespeichert. Nach erfolgter Aufzeichnung und Abspeicherung der als Bezugsmuster für die gesprochenen Befehle dienenden Bezugsdaten kann der Benutzer, während er eine Identifiziertaste betätigt, Befehle zur Betätigung der Aggregate sprechen.

**Des weiteren ist aus dem US-Patent US 4,797,924 ein System zur Steuerung von Subsystemen wie Telefon, Radio oder Sitzverstellung beschrieben. Der Aufruf dieser Subsysteme als auch ihre Steuerung selbst, erfolgt über Sprachkommandos. Neben der Sprachbedienung ist für jedes der Subsysteme eine manuelle Bedienung vorgesehen.**

Soll jedoch mit den beschriebenen sprachgesteuerten Vorrichtungen eine große Anzahl von Aggregaten beziehungsweise Stellgliedern, beispielsweise der gesamten Komfortelektronik, gesteuert werden, tritt das Problem auf, daß die das Kraftfahrzeug benutzende Person sich viele Musterbefehle merken muß, dadurch besteht die Gefahr von Fehlbedienungen einzelner Aggregate oder der Betätigung eines nicht gewünschten Stellglieds.

Die Aufgabe der Erfindung besteht deshalb darin, eine Einrichtung zur Betätigung unterschiedlicher Stellglieder zu schaffen, bei der die Gefahr von Fehlbedienungen durch falsche Sprachbefehle weitgehendst ausgeschlossen ist.

Die Aufgabe wird bei einer Multifunktionseinrichtung nach dem Oberbegriff des Patentanspruchs durch die kennzeichnenden Merkmale gelöst. Vorteilhatte Weiterbildungen und Ausgestaltungen sind in den Unteransprüchen dargestellt.

Der Grundgedanke der Erfindung besteht darin, daß die sprachgesteuerten Mittel **einzig und allein** zur Auswahl der einzelnen Funktionsebenen **vorgesehen sind** und die Steuerung der der ausgewählten Funktionsebene zugeordneten Stellglieder bzw. Aktuatoren **nur über manuell betätigbare Mittel durchführbar ist.**

Nach einer vorteilhaften Ausgestaltung erfolgt die Anwahl der Funktionsebenen über die Eingabe von Schlüsselworten wie beispielsweise "Fensterheber", "Außenspiegel" oder "Radio", die einfach erlern- und merkbar sind.

Eine Weiterbildung der Erfindung sieht vor, daß die sprachgesteuerten Mittel über ein zusätzliches Betätigungselement automatisch aktivierbar- und deaktivierbar ausgebildet sind. Dies hat insbesondere den Vorteil, daß sie jederzeit abgeschaltet werden können und nicht ungewollt eine Funktionsebene durch zufällig während einer Unterhaltung besprochene Befehle ausgewählt wird. Bei einer Ausgestaltung dieser Weiterbildung sind die sprachgesteuerten Mittel derart ausgebildet, daß sie nach Anwahl einer Funktionsebene automatisch abgeschaltet werden.

Zur Information der Bedienperson kann außerdem eine Einrichtung zur Anzeige der ausgewählten Funktionsebene vorgesehen werden. Die Mittel zur manuellen Betätigung als auch die Einrichtung zur Aktivierung und Deaktivierung der sprachgesteuerten Mittel sind vorzugsweise als Druckschalter ausgebildet.

Die Erfindung hat gegenüber bekannten Multifunktionseinrichtungen den Vorteil, daß bei einer einfachen Bedienung und übersichtlichen Anordnung der Betätigungselemente die Möglichkeit einer Fehlbedienung auch bei einer hohen Anzahl von zu realisierenden Funktionen stark eingeschränkt ist. Bei einer Verwendung der erfindungsgemäßen Multifunktionseinrichtung im Kraftfahrzeug ist nach einer vorteilhaften Ausbildung vorgesehen, daß einen Geräuschpegel erzeugende Komfortelement bei Aktivierung der sprachgesteuerten Mittel stumm geschaltet werden. Nachfolgend wird die Erfindung anhand von Ausführungsbeispielen näher beschrieben. Die zugehörigen Zeichnungen zeigen:
- Figur 1: ein Blockschaltbild der erfindungsgemäßen Multifunktionseinrichtung für ein Kraftfahrzeug,
- Figur 2a bis 2c: drei mögliche anwählbare Funktionsebenen und
- Figur 3: eine Einrichtung für eine Funktionsebene mit mehr als zwei Mitteln zur manuellen Betätigung.

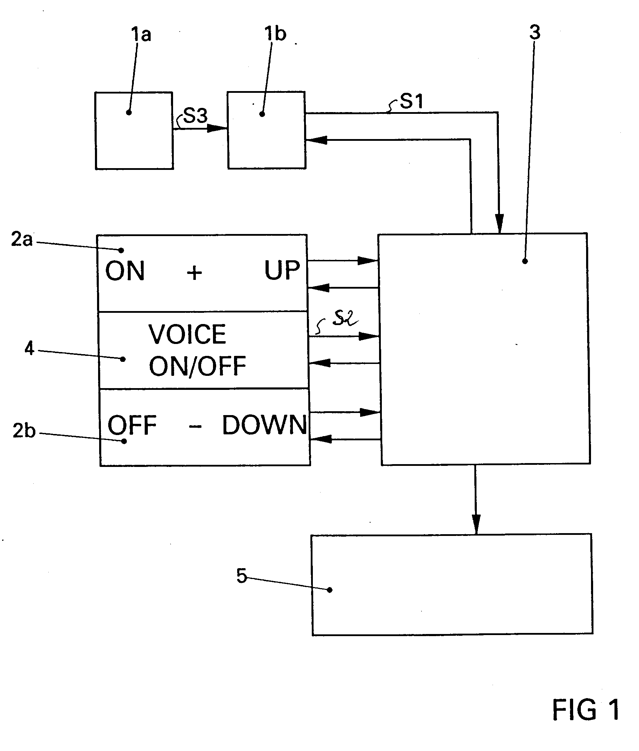

Das in Figur 1 dargestellte Blockschaltbild zeigt eine mögliche Ausführungsform der Erfindung für ein Kraftfahrzeug, bei der die manuell durch eine Person bedienbaren Mittel aus jeweils einem Druckschalter 2a und 2b bestehen, auf denen je nach angewählter Funktionsebene bestimmte Bedienfunktionen angezeigt werden. Die sprachgesteuerten Mittel 1 weisen eine Sprachaufnahmeeinrichtung 1a sowie eine mit dieser verbundenen Sprachverarbeitungseinrichtung 1b auf, die im normalen Betrieb die ankommenden Sprachbefehle S3 mit in ihrem Referenzspeicher abgelegten vorzugsweise sprecherunabhängigen Bezugsdaten für die Identifizierung gesprochener Befehle vergleicht und in Abhängigkeit ihrer Identifizierung entsprechende Steuersignale S1 an die nachgeschaltete Steuereinrichtung 3 abgibt. Nach dem Ausführungsbeispiel erfolgt die Verarbeitung der gesprochenen Befehle S3 in der Sprachverarbeitungseinrichtung 1b nur in Abhängigkeit der Abgabe eines Aktivierungssignals S2, das die Steuerschaltung 3 durch die Betätigung der ebenfalls als Druckschalter ausgebildeten Aktivierungsmittel 4 erhält. Nach Auswahl der gewünschten Funktionsebene werden die sprachgesteuerten Betätigungsmittel 1 manuell über den Druckschalter 4 oder automatisch deaktiviert. Dies stellt sicher, daß nicht durch willkürlich gesprochene Befehle während einer Unterhaltung eine nicht gewünschte Funktionsebene angewählt wird.

Die Bezugsdaten für die Identifizierung der gesprochenen Befehle S3 können bei der erfindungsgemäßen Einrichtung fest durch den Hersteller im Referenzspeicher hinterlegt werden oder durch eine durchzuführende Lernroutine vom Benutzer eingegeben werden.

Mit der Steuerschaltung 3 ist weiterhin eine Anzeige 5 verbunden, die zur Information des Benutzers die ausgewählte Funktionsebene anzeigt. Im Kraftfahrzeug kann diese Anzeige 5 vorzugsweise im Sichtbereich des Fahrzeugführers oder auch im Bereich der Mittelkonsole angeordnet werden.

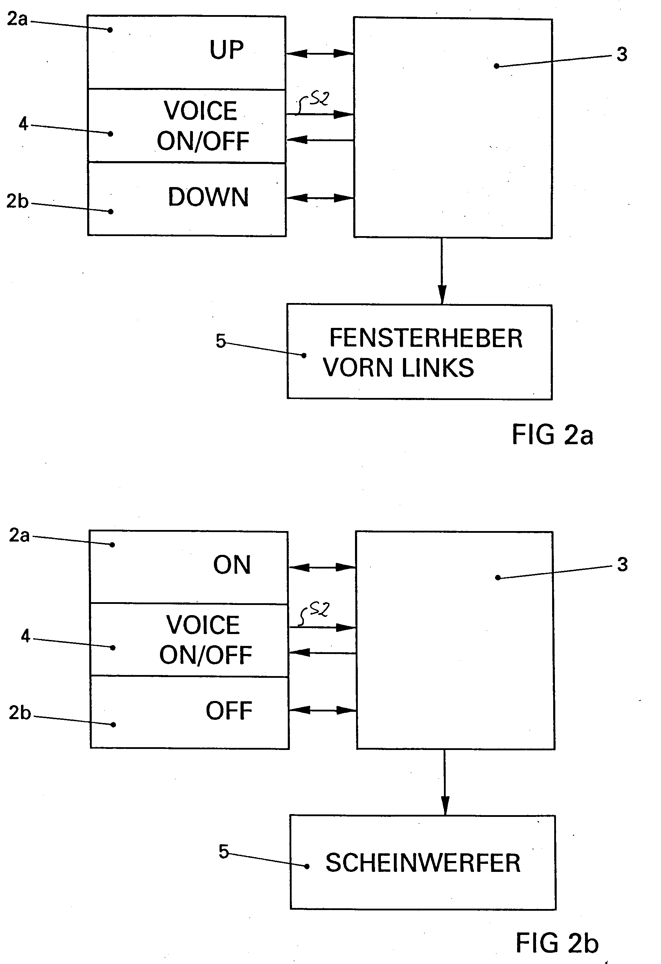

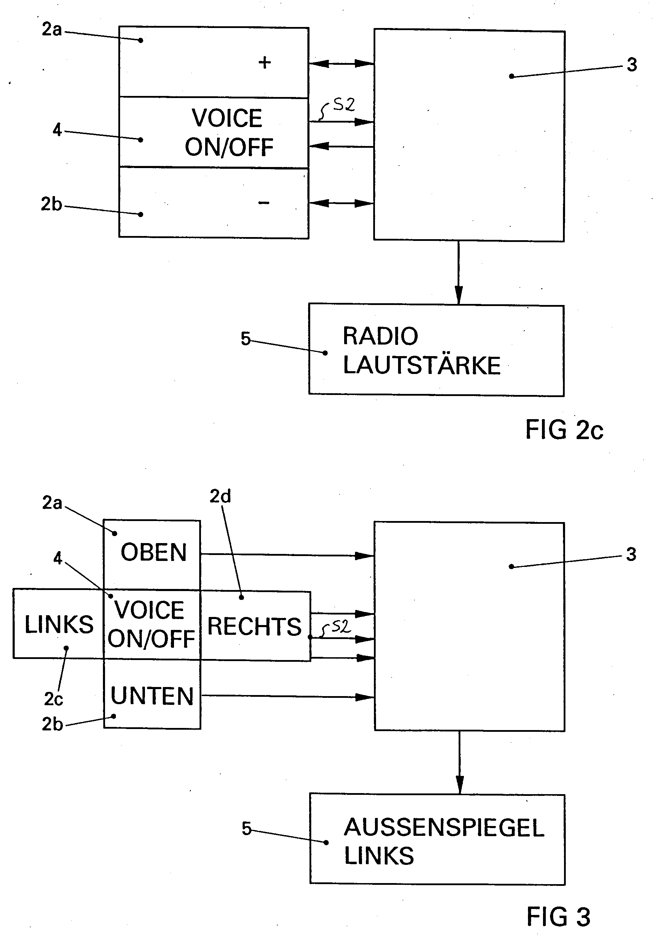

Die Figuren 2a bis 2c zeigen Varianten der Tastenbelegungen bei drei verschiedenen Funktionsebenen. Mit Hilfe der Multifunktionseinrichtung sind jedoch auch Stellglieder solcher Systeme betätigbar, bei denen die Steuerung der ausgewählten Funktionsebene mit zwei manuell betätigbaren Mitteln 2a; 2b nicht ausreichend wäre. Als Beispiel zeigt Figur 3 eine mögliche Anordnung für die Einstellung des linken Außenspiegels im Kraftfahrzeug. Hier sind vier manuell betätigbare Druckschalter 2a bis 2d für die verschiedenen Bewegungsrichtungen vorgesehen. Bei Umschaltung auf eine Funktionsebene, die nur die Druckschalter 2a, 2b benötigt, sind die Druckschalter 2c und 2d deaktiviert und geben kein Steuersignal S4 an die Steuereinrichtung 3 ab. Die Deaktivierung kann beispielsweise durch eine nicht vorhandene Beleuchtung der Schalter sichtbar gemacht werden.

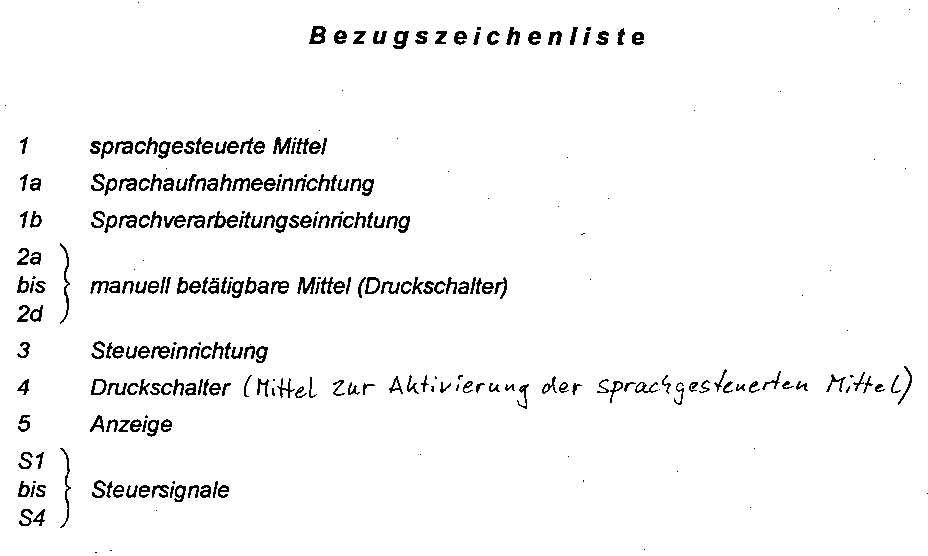

## Patentansprüche

1. Multifunktionseinrichtung zur Betätigung unterschiedlicher Stellglieder mit Mitteln (1) zur sprachgesteuerten Betätigung und Mitteln (2a - 2d) zur manuellen Betätigung, dadurch gekennzeichnet, daß die sprachgesteuerten Mittel (1) nur zur Auswahl der unterschiedlichen Funktionsebenen vorgesehen sind, und die Steuerung der der ausgewählten Funktionsebene zugeordneten Stellglieder nur über die manuell betätigbaren Mittel (2a - 2d) durchführbar ist.

2. Einrichtung nach Anspruch 1, dadurch gekennzeichnet, daß die Auswahl der Funktionsebenen über die Eingabe von Schlüsselworten erfolgt.

3. Einrichtung nach Anspruch 1 oder 2, dadurch gekennzeichnet, daß die sprachgesteuerten Mittel (1) aktivier- und deaktivierbar ausgebildet sind.

4. Einrichtung nach Anspruch 3, dadurch gekennzeichnet, daß die sprachgesteuerten Mittel nach Auswahl einer Funktionsebene automatisch abschaltbar ausgebildet sind.

5. Einrichtung nach einem der Ansprüche 1 bis 4, dadurch gekennzeichnet, daß Mittel (5) zur Anzeige der ausgewählten Funktionsebene vorgesehen sind.

6. Einrichtung nach einem der Ansprüche 1 bis 5, dadurch gekennzeichnet, daß die manuell betätigbaren Mittel (2a - 2d) eine in Abhängigkeit der ausgewählten Funktionsebene wechselnde Bedienanzeige aufweisen.

7. Einrichtung nach einem der Ansprüche 1 bis 6, dadurch gekennzeichnet, daß die Mittel (2a - 2d) zur manuellen Betätigung und/oder die Mittel (4) zur Aktivierung der sprachgesteuerten Mittel als Druckschalter ausgebildet sind.

8. Einrichtung nach einem der Ansprüche 1 bis 7, dadurch gekennzeichnet, daß die sprachgesteuerten Mittel (1) sprecherunabhängig ausgebildet sind.

9. Kraftfahrzeug, dadurch gekennzeichnet, daß eine Multifunktionseinrichtung zur Betätigung unterschiedlicher Stellglieder nach einem der Ansprüche 1 bis 8 vorgesehen ist.

10. Kraftfahrzeug nach Anspruch 9, dadurch gekennzeichnet, daß die Mittel (4) zur Aktivierung der sprachgesteuerten Mittel (1) bei Aktivierung die im Kraftfahrzeug befindlichen, einen Geräuschpegel erzeugenden Komforteinrichtungen stumm schaltet.

## Claims

1. Multifunctional device for actuating different actuators comprising means (1) for voice-controlled actuation and means (2a-2d) for manual actuation, characterised in that the voice-controlled means (1) are provided only for selecting the different function levels and the actuators allocated to the selected function level are controlled only by way of the manually-actuated means (2a-2d).

2. Device according to claim 1, characterised in that the function levels are selected by way of inputting key words.

3. Device according to claim 1 or 2, characterised in that the voice-controlled means (1) are formed in such a manner as they can be activated and deactivated.

4. Device according to claim 3, characterised in that the voice-controlled means are designed in such a manner that they can be switched off automatically after a function level has been selected.

5. Device according to any one of claims 1 to 4, characterised in that the means (5) are provided for the purpose of displaying the selected function level.

6. Device according to any one of claims 1 to 5, characterised in that the means (2a-2d) for manual actuation comprise an operating display which changes in response to the selected function level.

7. Device according to any one of claims 1 to 6, characterised in that the means (2a-2d) for manual actuation and/or the means (4) for activating the voice-controlled means are formed as a push switch.

8. Device according to any one of claims 1 to 7, characterised in that the voice-controlled means (1) are designed in such a manner that they are not dependent upon the speaker.

9. Motor vehicle characterised in that a multifunction device is provided for the purpose of actuating different actuators according to any one of claims 1 to 8.

10. Motor vehicle according to claim 9, characterised in that the means (4) for the purpose of activating the voice-controlled means (1), upon activation, switches to the mute mode the added-feature devices which are located in the motor vehicle and which produce a noise level.

## Revendications

1. Dispositif à fonctions multiples d'actionnement de différents organes réglants, comprenant des moyens (1) d'actionnement à commande vocale et des moyens (2a-2d) d'actionnement manuel, caractérisé en ce que les moyens (1) à commande vocale ne sont prévus que pour la sélection des différents plans fonctionnels et la commande des organes réglants associés au plan fonctionnel sélectionné ne peut être exécutée que par les moyens s'actionnant à la main (2a-2d).

2. Dispositif selon la revendication 1, caractérisé en ce que la sélection des plans fonctionnels s'effectue par entrée de mots-clés.

3. Dispositif selon la revendication 1 ou 2, caractérisé en ce que les moyens (1) à commande vocale sont réalisés de manière à pouvoir être mis en service et hors service.

4. Dispositif selon la revendication 3, caractérisé en ce que les moyens à commande vocale sont réalisés de manière à pouvoir être coupés automatiquement après la sélection d'un plan fonctionnel.

5. Dispositif selon l'une des revendications 1 à 4, caractérisé en ce que des moyens (5) d'affichage du plan fonctionnel sélectionné sont prévus.

6. Dispositif selon l'une des revendications 1 à 5, caractérisé en ce que les moyens (2a-2d) s'actionnant à la main comportent un affichage de la manipulation qui change en fonction du plan fonctionnel sélectionné.

7. Dispositif selon l'une des revendications 1 à 6, caractérisé en ce que les moyens (2a-2d) d'actionnement manuel et/ou les moyens (4) de mise en service des moyens à commande vocale sont réalisés sous forme d'interrupteurs à poussoir.

8. Dispositif selon l'une des revendications 1 à 7, caractérisé en ce que les moyens (1) à commande vocale sont réalisés de manière à être indépendants du locuteur.

9. Véhicule, caractérisé en ce qu'un dispositif à fonctions multiples d'actionnement d'organes réglants différents selon l'une des revendications 1 à 8 est prévu.

10. Véhicule selon la revendication 9, caractérisé en ce que, lorsqu'ils sont mis en service, les moyens (4) de mise en service des moyens (1) à commande vocale commutent les dispositifs de confort se trouvant dans le véhicule et générant un niveau de bruit de manière à les rendre silencieux.
